# EUROPEAN PATENT SPECIFICATION

(11) **EP 3 505 368 B1**
(45) Date of publication and mention of the grant of the patent: **30.09.2020**
(21) Application number: 17843425.4
(22) Date of filing: 10.08.2017
(51) Int. Cl.: B60C 11/03, B60C 11/13

(54) **TIRE**
REIFEN
PNEU

(30) Priority: 26.08.2016 JP 2016165388
(43) Date of publication of application: 03.07.2019
(73) Proprietor: Bridgestone Corporation, Tokyo 104-8340 (JP)
(72) Inventor: YAMAGUCHI, Masashi, Tokyo, 104-8340 (JP)
(74) Representative: Oxley, Robin John George
(86) International application number: PCT/JP2017/029134
(87) International publication number: WO 2018/037941

(56) References cited:
- EP-A1- 0 520 755
- EP-A1- 0 648 622
- EP-A1- 2 614 966
- WO-A1-2007/072717
- WO-A1-2015/093238
- JP-A- 2007 008 342
- JP-A- 2008 221 977
- JP-A- 2011 178 306
- JP-A- 2011 178 306
- JP-A- 2012 111 342
- JP-A- 2012 153 156
- JP-A- 2012 183 885
- JP-A- 2014 076 764
- US-A1- 2009 090 445

## Description

### [Technical Field]

The present invention relates to a tire including a circumferential direction groove extended in a tire circumferential direction.

### [Background Art]

It is generally known that a component of a tire is deformed in travelling and a temperature of the tire is increased, so that a tire failure is caused. Accordingly, in order to improve tire durability, it is necessary to suppress the deformation or the temperature increase thereof. Thus, a tire disclosed in Patent Literature 1 suppresses the deformation by using a reinforcing member in a belt layer. Attention is also drawn to the disclosures of EP2614966A1, US2009/090445A1 and WO2015/093238A1.

### [Citation List]

### [Patent Literature]

[PTL 1] Japanese Unexamined Patent Application Publication No. 2007-055578

### [Summary of Invention]

### [Problems to be Solved by the Invention]

However, a technique disclosed in Patent Literature 1 leads an increase in weight due to the reinforcing member and therefore goes against the resource saving as a recent social need. Further, the reinforcing member does not contribute the suppression of the temperature increase of the tire.

Accordingly, an object of the present invention is, in consideration of the problem described above, to provide a tire capable of suppressing a temperature increase in travelling effectively without using a reinforcing member.

### [Means for Solving the Problems]

A tire according to a first aspect is provided as claimed in claim 1.

In the first aspect, the features of claim 2 may be provided.

In the first aspect, the groove depth of the first lateral groove may be set in a range between 5% and 20% of the groove depth of the second circumferential direction groove.

In the first aspect, a distance between the bent portions adjacent to each other in the second circumferential direction groove may be two or more times as large as the groove width of the second circumferential direction groove. The number of the bent portions in the second circumferential direction groove may be set to 100 or more on a circumference of the tire.

[DELETED]

[DELETED]

In the first aspect, a groove bottom bent toward an inner side in the bent portions may be formed in a circular shape.

In the first aspect, a curve portion extended in a curve manner in the tire circumferential direction may be formed in the second circumferential direction groove.

In the first aspect, a groove width of an opening portion of the bent portions may be larger than a groove width of a groove bottom.

In the first aspect, the tire may be formed as a heavy load tire.

### [Effects of the Invention]

According to the present invention, the temperature increase in travelling can be suppressed effectively without using a reinforcing member.

### [Brief Description of Drawings]

[Fig. 1] Fig. 1 is plane view illustrating a tread surface of a tire according to an example, which is not according to the present invention, but is useful for understanding the present invention.
[Fig. 2] Fig. 2(a) is a view of a part surrounded by a dashed line in Fig. 1. Fig. 2(b) is a cross-sectional view taken along line A-A shown in Fig. 2(a). Fig. 2(c) is a graph illustrating a relationship between a height from a groove bottom and a flow velocity. Fig. 2(d) is a cross-sectional view taken along line A-A shown in Fig. 2(a).
[Fig. 3] Fig. 3 is a graph illustrating a relationship between average heat conductivity of the groove bottom and an angle.
[Fig. 4] Fig. 4 is a plane view illustrating a tread surface of a tire according to a modified example 1 of the example of Fig. 1, which is not according to the present invention, but is useful for understanding the present invention.
[Fig. 5] Fig. 5(a) is a plane view illustrating a tread surface of a tire according to a modified example 2 of the example of Fig. 1, which is not according to the present invention, but is useful for understanding the present invention. Fig. 5(b) is a cross-sectional view taken along line A-A shown in Fig. 5(a).
[Fig. 6] Fig. 6 is a view for describing a flow of air in a case in which a lateral groove extended from the circumferential direction groove toward an outer side in a tire width direction is communicated with an end portion of the tread.
[Fig. 7] Fig. 7(a) is a view for describing a configuration of the lateral groove in a cross-sectional view taken along line D-D shown in Fig. 6. Fig. 7(b) is a view for describing another configuration of the lateral groove in the cross-sectional view take along line D-D shown in Fig. 6.
[Fig. 8] Fig. 8(a) is a plane view illustrating a tread surface of a tire according to an example 1, which is not according to the present invention, but is useful for understanding the present invention. Fig. 8(b) is a cross-sectional view taken along line A-A shown in Fig. 8(a). Fig. 8(c) is a cross-sectional view taken along line B-B shown in Fig. 8(a).
[Fig. 9] Fig. 9(a) is a plane view illustrating a tread surface of a tire according to an example 2 of the present invention. Fig. 9(b) is a cross-sectional view taken along line A-A shown in Fig. 9(a). Fig. 9(c) is a cross-sectional view taken along line B-B shown in Fig. 9(a).
[Fig. 10] Fig. 10 is a view for describing a twist of a groove wall of a circumferential direction groove.
[Fig. 11] Fig. 11(a) is a plane view illustrating a tread surface of a tire according to an example 3 of the present invention. Fig. 11(b) is a cross-sectional view taken along line A-A shown in Fig. 11(a). Fig. 11(c) is a cross-sectional view taken along line B-B shown in Fig. 11(a).
[Fig. 12] Fig. 12 is a plane view illustrating a tread surface of other tire, which is not according to the present invention but is useful for understanding the present invention.
[Fig. 13] Fig. 13 is a plane view illustrating a tread surface of another tire of the present invention.
[Fig. 14] Fig. 14 is a plane view illustrating a tread surface of another tire of the present invention.
[Fig. 15] Fig. 15(a) is a view for describing a contact surface of the tire with water. Fig. 15(b) is a view for describing a contact surface of the tire with air.

### [Description of Embodiments]

Next, an embodiment of the present invention will be described with reference to the drawings. In the description of the drawings, the same reference numerals are assigned to the same parts, and the description thereof is therefore omitted.

### (1) Whole configuration of tread portion

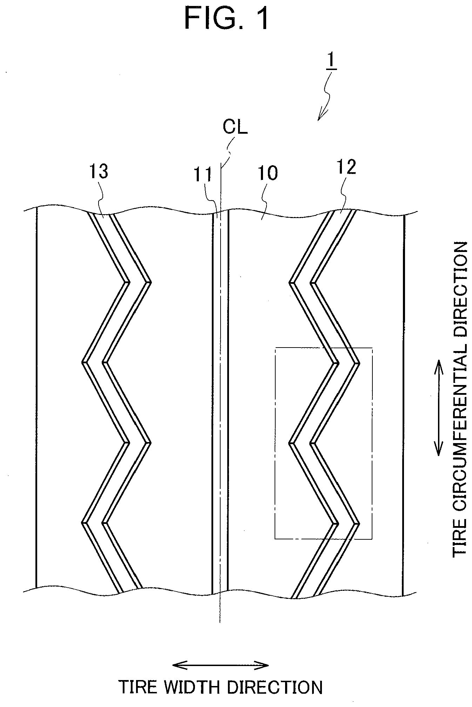

A configuration of a tire 1 according to the present embodiment will be described with reference to Fig. 1. As shown in Fig. 1, three circumferential direction grooves (a first circumferential direction groove 11, a second circumferential direction groove 12, and a third circumferential direction groove 13) respectively extended in a tire circumferential direction are formed on a tread portion 10 of the tire 1. A first circumferential direction groove 11 is formed on a tire equatorial line CL. The second circumferential direction groove 12 and the third circumferential direction groove 13 are formed at outer sides in a tire width direction respectively with respect to the first circumferential direction groove 11. The second circumferential direction groove 12 and the third circumferential direction groove 13 are formed at opposite sides with respect to the first circumferential direction groove 11. Further, in the present embodiment, the second circumferential direction groove 12 and the third circumferential direction groove 13 are formed symmetry in a left and right direction, however they are not limited to such a configuration. Further, in the present embodiment, the tire 1 is formed as a radial tire for a truck or a bus (TBR), however the tire 1 is not limited to such a tire.

The first circumferential direction groove 11 is formed in a linear shape in a plane view of the tread portion 10. On the other hand, each of the second circumferential direction groove 12 and the third circumferential direction groove 13 is formed in a zigzag shape in the plane view of the tread portion 10. Further, the first circumferential direction groove 11 is not limited to a linear shape. The first circumferential direction groove 11 may be formed in a zigzag shape.

### (2) Specific configuration of circumferential direction groove

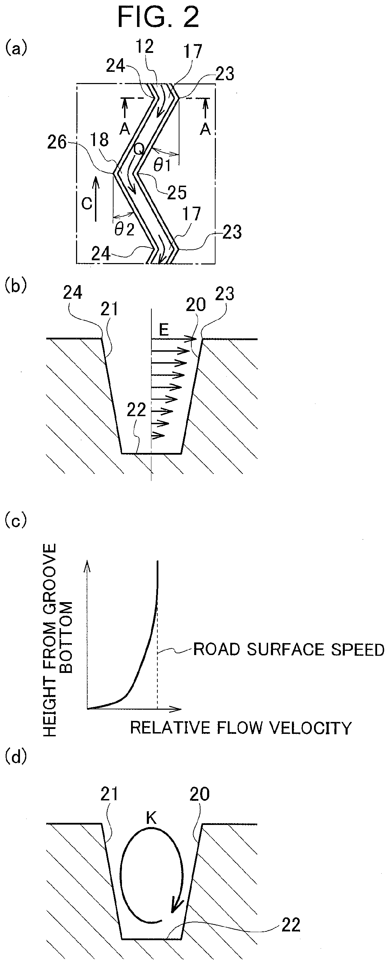

Next, details of the second circumferential direction groove 12 will be described with reference to Fig. 2(a) to Fig. 2(d).

As shown in Fig. 2(a), the second circumferential direction groove 12 includes a first bent portion 17 bent at an angle θ1 against the tire circumferential direction and a second bent portion 18 bent at an angle θ2 against the tire circumferential direction. The first bent portion 17 is bent at the angle θ1 against the tire circumferential direction from an outer side in the tire width direction toward an inner side in the tire width direction. The second bent portion 18 is bent at the angle θ2 against the tire circumferential direction from the inner side in the tire width direction toward the outer side in the tire width direction. Specifically, the angle θ1 of the first bent portion 17 is defined by an angle between a straight line and the tire circumferential direction. The straight line is extended inward in the tire width direction from a corner portion 23 (a corner portion 23 shown in Fig. 2(b)) defined by a wheel tread and a groove wall at the outer side in the tire width direction of the first bent portion 17 toward a corner portion 25 defined by the wheel tread and a groove wall at the outer side in the tire width direction of the second bent portion 18. Similarly, the angle θ2 of the second bent portion 18 is defined by an angle between a straight line and the tire circumferential direction. The straight line is extended outward in the tire width direction from a corner portion 26 defined by the wheel tread and a groove wall at the inner side in the tire width direction of the second bent portion 18 toward a corner portion 24 defined by the wheel tread and a groove wall at the inner side in the tire width direction of the first bent portion 17. The angles θ1 and θ2 are described in detail below, however each of the angles θ1 and θ2 is preferably set in a range between 12 degrees and 41 degrees. Further, the angles θ1 and θ2 may be set to the same angle or different angles within the range between 12 degrees and 41 degrees. An air flow Q in the second circumferential direction groove 12 shows a flow of air in the groove generated relatively opposite to a tire rotation direction C.

Next, an A-A section in Fig. 2(a) will be described with reference to Fig. 2(b). As shown in Fig. 2(b), the second circumferential direction groove 12 includes a pair of groove walls (a first groove wall 20 and a second groove wall 21) formed so as to interpose the second circumferential direction groove 12 therebetween, and a groove bottom 22. A groove width of the second circumferential direction groove 12 is opened to spread from the groove bottom 22 toward an opening portion. In other words, the groove width of the opening portion is larger than the groove width of the groove bottom 22. Further, the groove width of the opening portion may be as same as the groove width of the groove bottom 22. Further, a ratio of a groove depth to the groove width of the second circumferential direction groove 12 is preferably set in a range between 0.5 and 3.

The air flowing in the second circumferential direction groove 12 turns at the first bent portion 17 and therefore its direction is abruptly changed. When the air flowing in the second circumferential direction groove 12 turns at the first bent portion 17, the centrifugal force is generated in the air in the groove. Here, as R is defined by a curvature radius of the first bent portion 17 and V is defined by a flow velocity of the air in the groove, the centrifugal force generated in the air in the groove is defined as V²/R.

Next, a relationship between a height from the groove bottom 22 and a flow velocity V of the air in the groove will be described with reference to Fig. 2(c). As shown in Fig. 2(c), the flow velocity V of the air in the groove becomes a minimum near the groove bottom 22 because of an influence of viscosity thereof, and the flow velocity V approaches a road surface speed as it is far from the groove bottom 22. That is, since the centrifugal force generated in the air in the groove is proportional to square of the flow velocity V of the air, the centrifugal force becomes a minimum near the groove bottom 22 and becomes a maximum near the opening portion of the second circumferential direction groove 12. Accordingly, as shown by an arrow E in Fig. 2(b), the centrifugal force generated in the air in the groove becomes larger as it is far from groove bottom 22.

Based on a distribution of the centrifugal force shown in Fig. 2(b), as shown in Fig. 2(d), a flow of air is generated in a clockwise direction in a groove section of the first bent portion 17. The flow of the air generated in the clockwise direction in the groove section of the first bent portion 17 is hereinafter described as a vortex flow K. Further, the centrifugal force is generated in the air in the second bent portion 18 similar to the first bent portion 17. The vortex flow K is generated in a counterclockwise direction in a groove section of the second bent portion 18.

The vortex flows K generated in the groove sections of the first bent portion 17 and the second bent portion 18 derive an effect to activate heat transfer between air at the groove bottom 22 and air above the opening portion. That is, the vortex flows K can improve the heat conductivity of the groove bottom 22 effectively. Consequently, the temperature increase of the tire 1 in travelling can be effectively suppressed without using the reinforcing member.

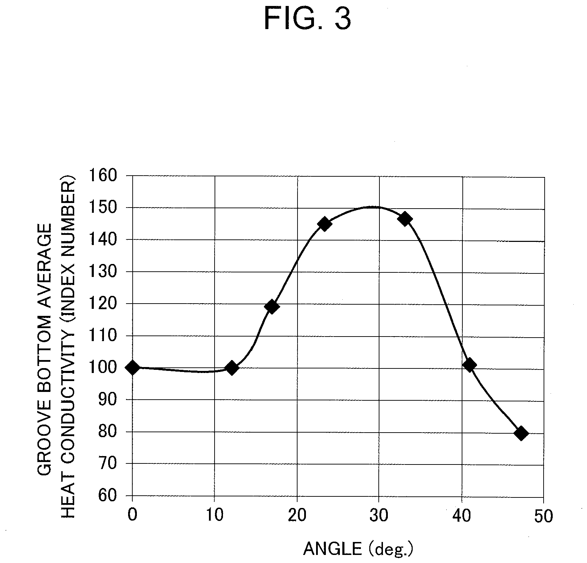

Next, a relationship between an average heat conductivity (index number) of the groove bottom 22 and the angles θ1 and θ2 will be described with reference to Fig. 3. A vertical axis of Fig. 3 shows the average heat conductivity as the average heat conductivity of a circumferential direction groove formed in a linear shape is indexed as 100. As shown in Fig. 3, in a case in which each of the angles θ1 and θ2 is set in a range between 12 degrees and 41 degrees, the heat conductivity is improved up to approximately 45%. Further, in a case in which each of the angles θ1 and θ2 is set in a range of a small angle (5 degrees to 10 degrees), since the curvature radius R of the first bent portion 17 is large, the driving force for generating the vortex flow K in the groove section of the first bent portion 17 is made small, and therefore the heat conductivity is not improved. On the other hand, in a case in which each of the angles θ1 and θ2 is set in a range of a large angle (42 degrees to 47 degrees), since the number of paths of the groove per one pitch is increased and an area of the air surrounded by the groove wall is increased, the flow velocity is decreased due to the viscosity resistance, and therefore the heat conductivity is not improved.

### (3) Modified examples of the present embodiment

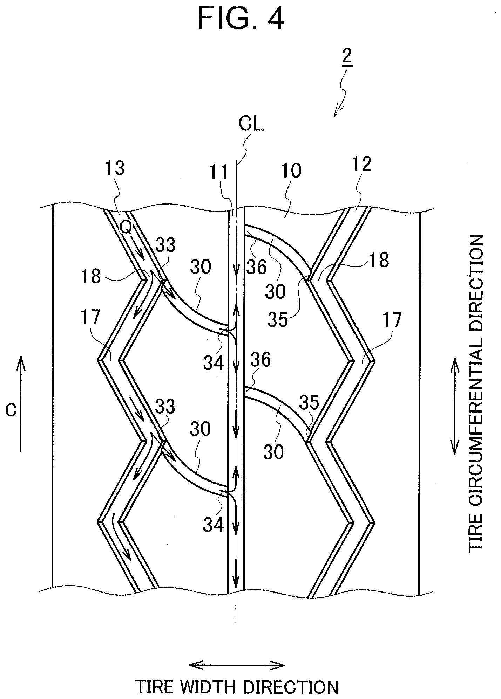

Next, a modified example 1 of the present embodiment will be described with reference to Fig. 4. As shown in Fig. 4, a first lateral groove 30 communicated with the first circumferential direction groove 11 and the third circumferential direction groove 13 is formed on a tire 2 according to the modified example 1. The first lateral groove 30 is extended along the tire width direction from the inner side in the tire width direction of the second bent portion 18 of the third circumferential direction groove 13 so as to be communicated with the first circumferential direction groove 11. That is, among both end portions of the first lateral groove 30, an end portion 33 at one side (one end portion) is communicated with the second bent portion 18 of the third circumferential direction groove 13, and an end portion 34 at another side (another end portion) is communicated with the first circumferential direction groove 11. By forming the first lateral groove 30 having such a configuration, a volume of air flowing in the third circumferential direction groove 13 and the first lateral groove 30 is increased. Accordingly, the velocity of the air flow Q in the second bent portion 18 of the third circumferential direction groove 13 is increased and the driving force for generating the vortex flow K in the groove section of the second bent portion 18 is increased, so that the heat conductivity of the groove bottom 22 is increased. Consequently, the temperature increase of the tire 2 in travelling can be effectively suppressed.

Here, the first lateral groove 30 may be formed at a side of the second circumferential direction groove 12. In such a case, the first lateral groove 30 is extended in the tire width direction from a bent portion closer to the first circumferential direction groove 11, namely the inner side in the tire width direction of the second bent portion 18 of the second circumferential direction groove 12 so as to be communicated with the first circumferential direction groove 11. With this, the heat conductivity of the groove bottom 22 can be further improved.

Further, as shown in Fig. 4, it is preferably that the first lateral groove 30 has an arc-shaped curve portion because the volume of the air flowing in the first lateral groove 30 is increased due to the Coanda effect. The Coanda effect denotes a characteristic of fluid trying to flow along a convex curve surface. Here, the flow of fluid denotes the flow of air. When the air flows in the first lateral groove 30, the direction of the air is changed by a curve portion of the first lateral groove 30. Accordingly, the air tries to flow toward the first circumferential direction groove 11 along the curve portion of the first lateral groove 30. In this way, since the first lateral groove 30 has the arc-shaped curve portion, the air is apt to flow toward the first circumferential direction groove 11 along the curve portion. Accordingly, the volume of the air flowing in the first lateral groove 30 is increased, and the velocity of the air flow Q in the second bent portion 18 is increased. Consequently, the driving force for generating the vortex flow K in the groove section of the second bent portion 18 is increased, and therefore the heat conductivity of the groove bottom 22 is increased.

Further, as shown in Fig. 4, in a case in which the first lateral groove 30 is also formed at a side of the second circumferential direction groove 12, among the both end portions of the first lateral groove 30, an end portion 35 at one side (one end portion) is communicated with the second bent portion 18 of the second circumferential direction groove 12 and an end portion 36 at another side (another end portion) is communicated with the first circumferential direction groove 11. As shown in Fig. 4, an intersection between the end portion 34 of the first lateral groove 30 and the first circumferential direction groove 11 and an intersection between the end portion 36 of the first lateral groove 30 and the first circumferential direction groove 11 are shifted from each other in the tire rotation direction C. In other words, the end portion 34 and the end portion 36 are communicated with the first circumferential direction groove 11 at different points in the tire rotation direction C, respectively. Further in other words, the end portion 34 and the end portion 36 are not communicated with each other in the tire rotation direction C. In a case in which the end portion 34 and the end portion 36 are communicated with each other, the airs flowing into the first lateral groove 30 are collided with each other, and the flow of the air might be interfered. In the present embodiment, as shown in Fig. 4, the end portion 34 and the end portion 36 are shifted from each other in the tire rotation direction C, so that the air flows smoothly.

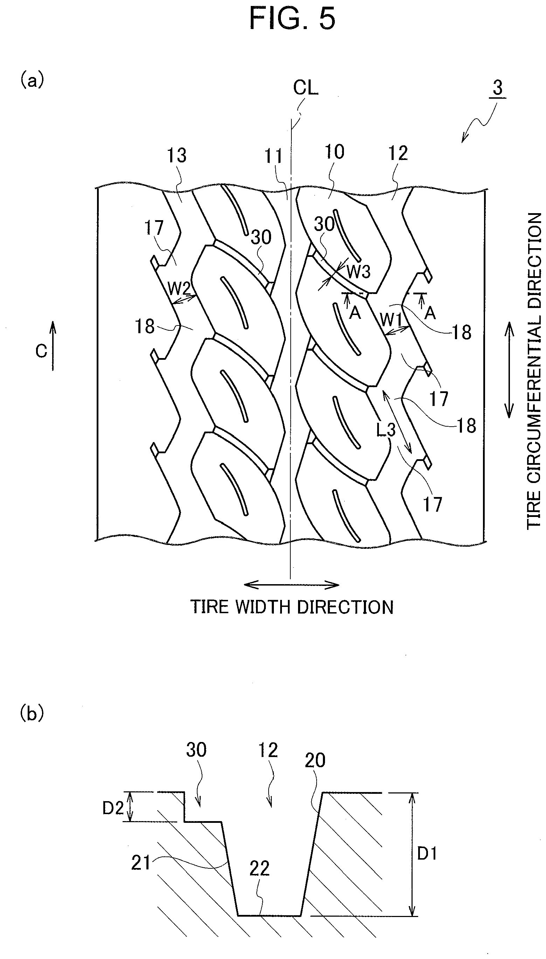

Next, a modified example 2 will be described with reference to Fig. 5(a) and Fig. 5(b). A first lateral groove 30 communicated with the first circumferential direction groove 11 and the second circumferential direction groove 12 is formed on a tire 3 shown in Fig. 5(a). Further, a first lateral groove 30 communicated with the first circumferential direction groove 11 and the third circumferential direction groove 13 is formed. The first circumferential direction groove 11 is formed in a zigzag shape in a plane view of the tread portion 10, similar to the second circumferential direction groove 12 and the third circumferential direction groove 13. Further, in Fig. 5(a), an illustration of the air flow Q is omitted, however when the tire 3 is rotated, the air flow Q is also generated in Fig. 5(a) similar to Fig. 4.

It is preferable that a groove width W1 of the second circumferential direction groove 12 shown in Fig. 5(a) is set in a range between 13 mm and 19 mm. Similarly, it is preferable that a groove width W2 of the third circumferential direction groove 13 shown in Fig. 5(a) is set in a range between 13 mm and 19 mm. In a case in which each of the groove width W1 and the groove width W2 is smaller than 13 mm, the groove width is too small to generate the vortex flow K sufficiently. Further, in a case in which each of the groove width W1 and the groove width W2 is larger than 19 mm, the volume of the air changed in direction at the first bent portion 17 and the second bent portion 18 is decreased, and therefore the vortex flow K is not sufficiently generated. On the other hand, in a case in which each of the groove width W1 and the groove width W2 is set in a range between 13 mm and 19 mm, the vortex flow K is generated easily, and therefore the temperature increase of the tire 3 in travelling can be suppressed effectively. Here, the groove width W1 denotes a groove width of the opening portion of the second circumferential direction groove 12. Similarly, the groove width W2 denotes a groove width of the opening portion of the third circumferential direction groove 13.

Further, as shown in Fig. 5(a), a groove width W3 of the first lateral groove 30 is smaller than each of the groove width W1 of the second circumferential direction groove 12 and the groove width W2 of the third circumferential direction groove 13, in order to make much air flow in the second circumferential direction groove 12 and the third circumferential direction groove 13 by preventing decrease of the volume of the air flowing in the second circumferential direction groove 12 and the third circumferential direction groove 13. As described above, by forming the first lateral groove 30, the volume of the air flowing in the second circumferential direction groove 12 and the third circumferential direction groove 13 is increased. However, since the volume of the air flowing in the first lateral groove 30 is increased as the groove width W3 is larger, the volume of the air flowing in the second circumferential direction groove 12 and the third circumferential direction groove 13 is relatively decreased. In a case in which the volume of the air flowing in the second circumferential direction groove 12 and the third circumferential direction groove 13 is decreased, the driving force for generating the vortex flow K in the groove section of the second bent portion 18 might be decreased. Thus, in the modified example 2, as shown in Fig. 5(a), the groove width W3 is set to be smaller than each of the groove width W1 and the groove width W2. With this, it is possible to make much air flow in the second circumferential direction groove 12 and the third circumferential direction groove 13 without decreasing the volume of the air flowing in the second circumferential direction groove 12 and the third circumferential direction groove 13. Accordingly, the velocity of the air flow Q in the second bent portion 18 is increased, and therefore the driving force for generating the vortex flow K in the groove section of the second bent portion 18 is increased. Consequently, the heat conductivity of the groove bottom 22 is increased.

Further, as shown in Fig. 5(b), a groove depth D2 of the first lateral groove 30 is smaller than a groove depth D1 of the second circumferential direction groove 12. Specifically, the groove depth D2 of the first lateral groove 30 is set in a range between 5% and 20% of the groove depth D1 of the second circumferential direction groove 12, in order to prevent the decrease of the centrifugal force in the groove section of the second bent portion 18. In an example shown in Fig. 5(b), the second groove wall 21 becomes smaller as the groove depth D2 is larger. In the above description, it is described that the centrifugal force generated in the air in the groove becomes larger as it is far from groove bottom 22. In order to generate such centrifugal force, the first groove wall 20 and the second groove wall 21 having a predetermined height are necessary. In a case in which the second groove wall 21 is made small, the centrifugal force might be small. Thus, in the modified example 2, as shown in Fig. 5(b), the groove depth D2 is set in a range between 5% and 20% of the groove depth D1. With this, it is possible to make much air flow in the second circumferential direction groove 12 and the third circumferential direction groove 13, and further it is possible to prevent the decrease of the centrifugal force in the groove section of the second bent portion 18. Accordingly, the velocity of the air flow Q in the second bent portion 18 is increased, and therefore the driving force for generating the vortex flow K in the groove section of the second bent portion 18 is increased. Consequently, the heat conductivity of the groove bottom 22 is increased.

Further, the first lateral groove 30 shown in Fig. 5(a) has an unclosed groove when the tread portion 10 is contacted with the ground. In other words, the first lateral groove 30 has a groove in which one groove wall and another groove wall facing each other are not contacted with each other when the tread portion 10 is contacted with the ground. Since the first lateral groove 30 is not closed when the tread portion 10 is contacted with the ground, the air flows smoothly in the first lateral groove 30 in rotating of the tire. Accordingly, the volume of the air flowing in the second circumferential direction groove 12 and the third circumferential direction groove 13 is increased, and therefore the velocity of the air flow Q in each of the second bent portions 18 of the second circumferential direction groove 12 and the third circumferential direction groove 13 is increased. Consequently, the driving force for generating the vortex flow K in the groove section of the second bent portion 18 is increased, and therefore the heat conductivity of the groove bottom 22 is increased.

Further, as shown in Fig 5(a), in the second circumferential direction groove 12, it is preferable that a distance L3 between the first bent portion 17 and the second bent portion 18 adjacent to each other is two or more times as large as the groove width W1 of the second circumferential direction groove 12. Similarly, in the third circumferential direction groove 13, it is preferable that a distance between the first bent portion 17 and the second bent portion 18 adjacent to each other is also two or more times as large as the groove width W2 of the third circumferential direction groove 13. The reason is to prevent cancel of the vortex flows K. As described above, the vortex flow K is generated in the clockwise direction in the groove section of the first bent portion 17. On the other hand, the vortex flow K is generated in the counterclockwise direction in the groove section of the second bent portion 18. In a case in which the distance L3 shown in Fig. 5(a) is smaller than two times as large as the groove width W1, the distance between the first bent portion 17 and the second bent portion 18 becomes short, compared to a configuration in which the distance L3 is two or more times as large as the groove width W1. In this way, in a case in which the distance between the first bent portion 17 and the second bent portion 18 is short, the vortex flow K in the first bent portion 17 and the vortex flow K in the second bent portion 18 are cancelled to each other because the directions of the vortex flows K are opposite to each other. Thus, it is preferable that the distance L3 shown in Fig. 5(a) is two or more times as large as the groove width W1. This is because, in a case in which the distance L3 is two or more times as large as the groove width W1, the vortex flow K in the first bent portion 17 and the vortex flow K in the second bent portion 18 can be prevented from being cancelled to each other.

Further, the number of the total bent portions of the first bent portions 17 and the second bent portions 18 in the second circumferential direction groove 12 is preferably set to 100 or more on a circumference of the tire 3. Similarly, the number of the total bent portions of the first bent portions 17 and the second bent portions 18 in the third circumferential direction groove 13 is preferably set to 100 or more on the circumference of the tire 3. Because the volume of the air changed in direction at the first bent portion 17 and the second bent portion 18 is decreased as the distance between the first bent portion 17 and the second bent portion 18 becomes longer and therefore the vortex flow K is not generated sufficiently, while the first bent portion 17 and the second bent portion 18 generate the centrifugal force as described above. In order to generate the vortex flow K sufficiently, the predetermined number of the bent portions is necessary. In a case in which the number of the bent portions is 100 or more on the circumference of the tire 3, the vortex flow K is generated sufficiently, and therefore the temperature increase of the tire 3 in travelling can be suppressed effectively.

Further, the number of the bent portions in the second circumferential direction groove 12 is preferably set to 100 or more and 160 or less on the circumference of the tire 3. Similarly, the number of the bent portions in the third circumferential direction groove 13 is preferably set to 100 or more and 160 or less on the circumference of the tire 3. As described above, it is preferable that the number of the bent portions is set to 100 or more on the circumference of the tire 3, and it is also preferable that the distance L3 shown in Fig. 5(a) is two or more times as large as the groove width W1. In order to fulfill these conditions, the number of the bent portions is limited to some extent. In a case in which the number of the bent portions is set to 100 or more and 160 or less on the circumference of the tire 3, the condition in which the distance L3 is two or more times as large as the groove width W1 is fulfilled, and the temperature increase of the tire 3 in travelling can be suppressed effectively.

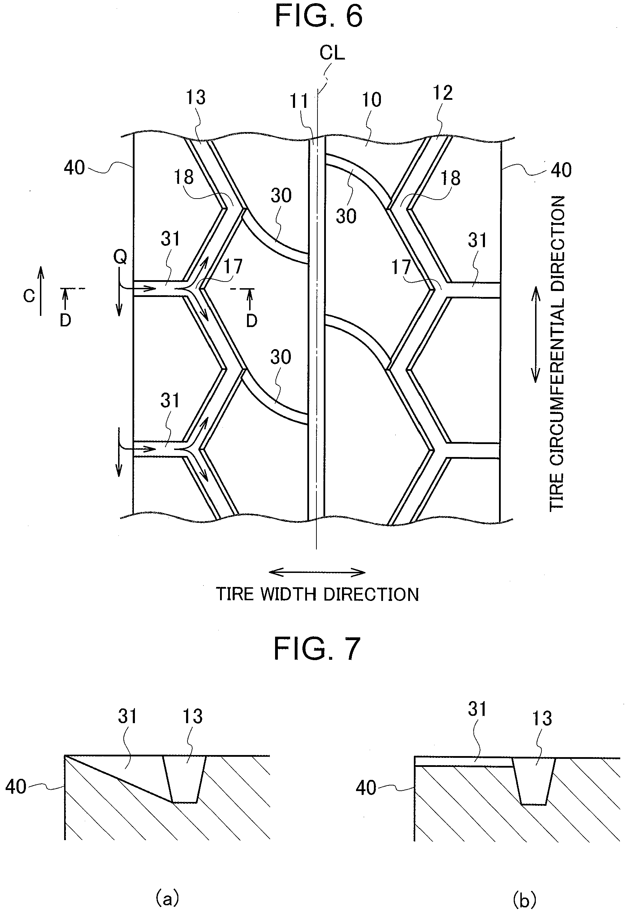

Further, as shown in Fig. 6, a second lateral groove 31 extended from the first bent portion 17 of the third circumferential direction groove 13 toward the outer side in the tire width direction may be formed. Further, the second lateral groove 31 is preferably communicated with the first bent portion 17 at the outer side in the tire width direction rather than the second bent portion 18 at the inner side in the tire width direction. As shown in Fig. 6, when the second lateral groove 31 extended from the first bent portion 17 of the third circumferential direction groove 13 toward the outer side in the tire width direction is communicated with a tread end 40, the air flows into the second lateral groove 31 from the tread end 40 and therefore a backflow of the air is generated in the third circumferential direction groove 13. Accordingly, the air flow Q generated relatively opposite to the tire rotation direction C is interfered, and therefore the driving force for generating the vortex flow K in the groove section of the first bent portion 17 is decreased and the heat conductivity of the groove bottom 22 is decreased. Thus, in a case in which the second lateral groove 31 extended from the first bent portion 17 of the third circumferential direction groove 13 toward the outer side in the tire width direction is formed, it is preferable that the second lateral groove 31 is formed not to be communicated with the tread end 40. On the other hand, in a case in which the second lateral groove 31 is formed so as to be communicated with the tread end 40 from the first bent portion 17 of the third circumferential direction groove 13 toward the outer side in the tire width direction as shown in Fig. 6, it is preferable that the second lateral groove 31 that suppresses invasion of the air is formed. For example, as shown in Fig. 7(a), it is preferable to form the second lateral groove 31 in which the groove depth of the second lateral groove 31 becomes gradually smaller toward the tread end 40. In an example shown in Fig. 7(a), the groove bottom of the second lateral groove 31 at the tread end 40 is located at the tread surface. By forming the second lateral groove 31 shown in Fig. 7, the air that flows into the second lateral groove 31 from the tread end 40 can be interrupted.

Further, as shown in Fig. 7(b), the second lateral groove 31 may be formed such that the groove depth of the second lateral groove 31 is smaller than the groove depth of the third circumferential direction groove 13. In the second lateral groove 31 shown in Fig. 7(b), since the groove depth communicated with the tread end 40 is small, the volume of the air that flows into the second lateral groove 31 from the tread end 40 can be made small.

### (4) Examples

Hereinafter, an evaluation result will be described. Specifically, samples described below were prepared, and the groove bottom heat conductivity (index number) and the belt durability (index number) of each sample were calculated.

As the samples, a sample according to a conventional example, samples according to examples 1 to 3 were prepared. A tire size of each sample is 325/95R24, and a parameter of each sample is shown in Table 1.

### Groove bottom heat conductivity

A groove bottom heat conductivity was calculated by performing a simulation of the groove bottom heat conductivity test. A calculation result is shown in Table 1. The calculation result is indexed as the result of the sample according to the conventional example is defined as 100. As the value is larger, the groove bottom heat conductivity is superior.

### Belt durability

A belt durability was predicted based on the groove bottom heat conductivity calculated by the simulation of the groove bottom heat conductivity test and the belt durability was calculated. A calculation result is shown in Table 1. The calculation result is indexed as the result of the sample according to the conventional example is defined as 100. As the value is larger, the belt durability is superior.

**[Table 1]**

| | Conventional example | Example 1 | Example 2 | Example 3 |
|---|---|---|---|---|
| Groove bottom heat conductivity (index number) | 100 | 144 | 159 | 172 |
| Belt durability (index number) | 100 | 110 | 113 | 116 |

The tire according to the conventional example shown in Table 1 is formed such that each of the second circumferential direction groove 12 and the third circumferential direction groove 13 described in the present embodiment are formed in a linear shape.

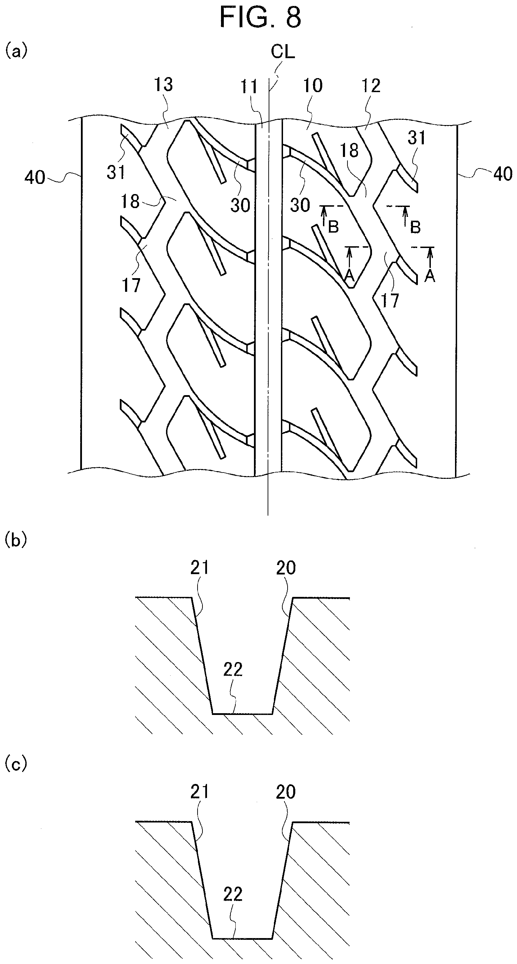

Fig. 8(a) through Fig. 8(c) illustrate the tire according to the example 1 shown in Table 1. The tire according to the example 1 is formed such that each of the first bent portion 17 and the second bent portion 18 of the second circumferential direction groove 12 and the third circumferential direction groove 13 is bent at an angle of 15 degrees to 30 degrees against the tire circumferential direction. Further, the first lateral groove 30 communicated with the first circumferential direction groove 11 and the second circumferential direction groove 12 is formed. Similarly, the first lateral groove 30 communicated with the first circumferential direction groove 11 and the third circumferential direction groove 13 is formed. Further, the second lateral groove 31 extended from the second circumferential direction groove 12 toward the outer side in the tire width direction is formed. Similarly, the second lateral groove 31 extended from the third circumferential direction groove 13 toward the outer side in the tire width direction is formed. Here, the second lateral groove 31 is not communicated with the tread end 40. Further, as shown in Fig. 8(b) and Fig. 8(c), a groove sectional shape of each of the second circumferential direction groove 12 and the third circumferential direction groove 13 is symmetry with respect to the tire radial direction.

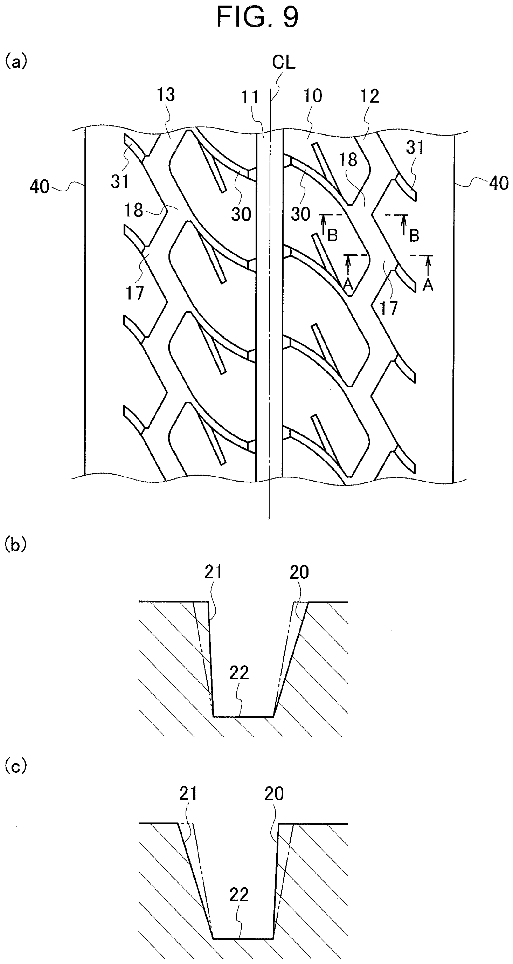

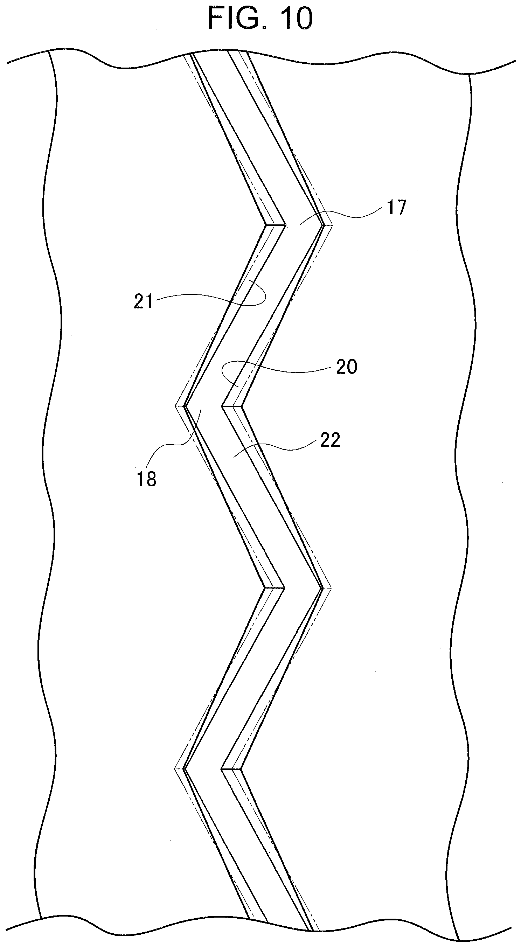

Fig. 9(a) through Fig. 9(c) illustrate the tire according to the example 2 shown in Table 1. The difference of the tire according to the example 2 from the tire according to the example 1 is that the groove sectional shape of each of the second circumferential direction groove 12 and the third circumferential direction groove 13 is asymmetric with respect to the tire radial direction. A dashed line shown in Fig. 9(b) and Fig. 9(c) illustrates the groove sectional shape shown in Fig. 8(b) and Fig. 8(c). In the tire according to the example 2, an inclined angle of the groove wall at an inner side of a bend of the bent portion is small, and an inclined angle of the groove wall at an outer side of the bend of the bent portion is large. The inclined angle denotes an angle that indicates how much the groove wall is inclined against the wheel tread, and the groove wall is inclined largely as the inclined angle becomes larger. In an A-A section shown in Fig. 9(b), the groove wall at an inner side of the bend of the first bent portion 17 is defined by the second groove wall 21, and therefore the inclined angle of the second groove wall 21 is small. Further, in the A-A section shown in Fig. 9(b), the groove wall at an outer side of the bend of the first bent portion 17 is defined by the first groove wall 20, and therefore the inclined angle of the first groove wall 20 is large. Similarly, in a B-B section shown in Fig. 9(c), the groove wall at an inner side of a bend of the second bent portion 18 is defined by the first groove wall 20, and therefore the inclined angle of the first groove wall 20 is small. Further, in the B-B section shown in Fig. 9(b), the groove wall at an outer side of the bend of the second bent portion 18 is defined by the second groove wall 21, and therefore the inclined angle of the second groove wall 21 is large. That is, as shown in Fig. 10, each of the first groove wall 20 and the second groove wall 21 is bent while being twisted. By inclining the first groove wall 20 and the second groove wall 21 in this way, the curvature radius R at the inner side in the groove section of each of the first bent portion 17 and the second bent portion 18 becomes small, and the centrifugal force is increased. Consequently, the driving force for generating the vortex flow K in the groove section of the first bent portion 17 and the second bent portion 18 is increased, and therefore the heat conductivity of the groove bottom 22 is increased.

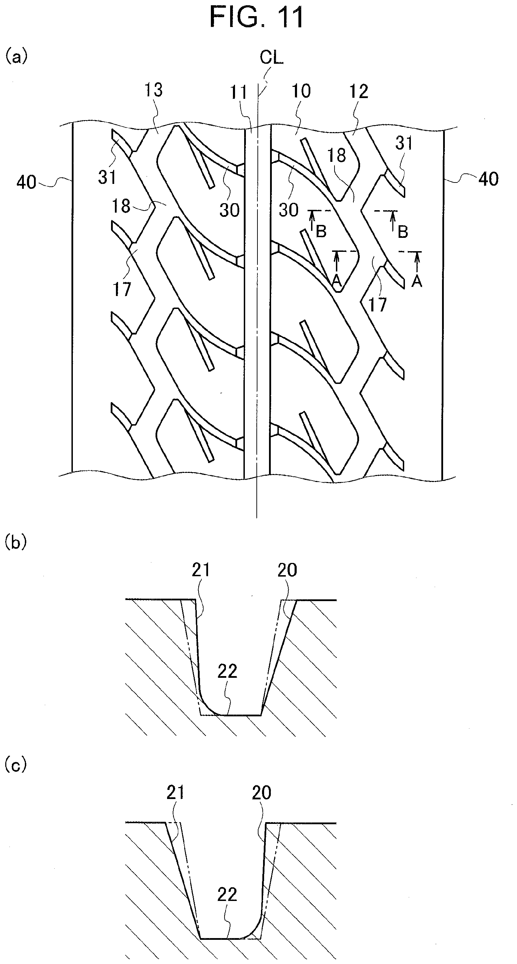

Fig. 11(a) through Fig. 11(c) illustrate the tire according to the example 3 shown in Table 1. The difference of the tire according to the example 3 from the tire according to the example 2 is that the groove bottom 22 of each of the second circumferential direction groove 12 and the third circumferential direction groove 13 is formed in a circular shape. Specifically, as shown in Fig. 11(b), the groove bottom 22 at a side of the second groove wall 21 bent toward the inner side is formed in a circular shape. Further, as shown in Fig. 11(c), the groove bottom 22 at a side of the first groove wall 20 bent toward the inner side is formed in a circular shape. By forming the groove bottom 22 at a side bent toward the inner side in a circular shape in this way, the centrifugal force of the groove bottom 22 is decreased. Consequently, the driving force for generating the vortex flow K is relatively increased, and therefore the heat conductivity of the groove bottom 22 is increased.

According to the result shown in Table 1, the tires according to the examples 1 to 3 are superior in the groove bottom heat conductivity and in the belt durability compared to the tire according to the conventional example.

As described above, the embodiment of the present invention is described, however the present invention is not limited to the description and the drawings forming a part of the present disclosure. Various modifications, examples, and operation techniques will be apparent from the present disclosure to a person skilled in the art, all falling within the protective scope of the appended claims.

In the present embodiment, as shown in Fig. 2(b), the groove width of each of the second circumferential direction groove 12 and the third circumferential direction groove 13 is opened to be spread from the groove bottom 22 toward the opening portion at a certain inclined angle. However, the opening portion may be spread such that the inclined angle is increased stepwise from the groove bottom 22 toward the opening portion.

Further, it is preferable that the surface roughness of the groove bottom 22 is larger than the surface roughness of each of the first groove wall 20 and the second groove wall 21. Further, it is preferable that the groove depth of each of the second circumferential direction groove 12 and the third circumferential direction groove 13 at the inner side in the tire width direction is smaller than that at the outer side in the tire width direction.

Further, it is preferable that the groove width of each of the second circumferential direction groove 12 and the third circumferential direction groove 13 is larger than the groove width of the first circumferential direction groove 11.

Further, since the centrifugal force of the vortex flow is decreased in a case in which a projection or a recess is formed on the groove bottom 22, the first groove wall 20, or the second groove wall 21, it is preferable that the projection or the recess is not formed on the groove bottom 22, the first groove wall 20, or the second groove wall 21.

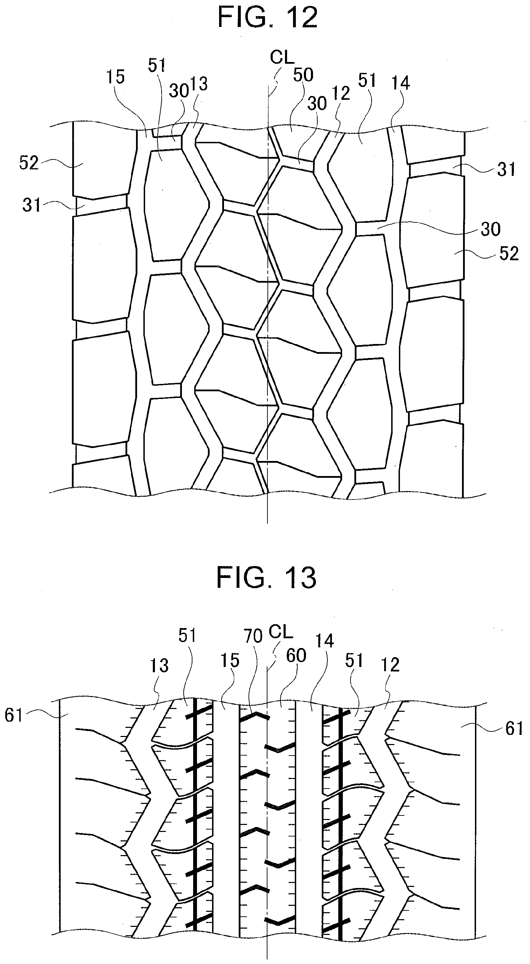

Further, the tire 1 according to the present embodiment can be applied to a tread pattern shown in Fig. 12. In the tread pattern shown in Fig. 12, a plurality of blocks 50 is formed between the second circumferential direction groove 12 and the third circumferential direction groove 13. A plurality of blocks 51 is formed between the second circumferential direction groove 12 and a fourth circumferential direction groove 14, and a plurality of the blocks 51 is also formed between the third circumferential direction groove 13 and a fifth circumferential direction groove 15. Further, a plurality of blocks 52 is formed in a shoulder portion.

Further, the tire 1 according to the present embodiment can be applied to a tread patter shown in Fig. 13. In the tread pattern shown in Fig. 13, a land portion 60 is formed between the fourth circumferential direction groove 14 and the fifth circumferential direction groove 15. Further, a plurality of sipes 70 is formed in the land portion 60. A plurality of the blocks 51 is formed between the second circumferential direction groove 12 and the fourth circumferential direction groove 14, and a plurality of the blocks 51 is also formed between the third circumferential direction groove 13 and the fifth circumferential direction groove 15. Further, a plurality of land portions 61 is formed in a shoulder portion.

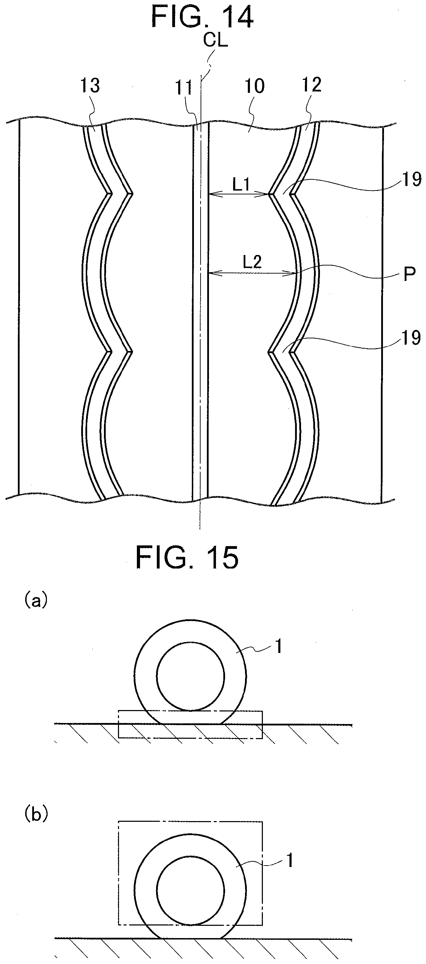

In the present embodiment, each of the second circumferential direction groove 12 and the third circumferential direction groove 13 is formed in a zigzag shape in a plane view of the tread portion 10, however as shown in Fig. 14, each of the second circumferential direction groove 12 and the third circumferential direction groove 13 may be formed in a curved shape having a convex at the inner side in the tire width direction. In this case, a curve portion 19 bent at an angle between 12 degrees and 41 degrees against the tire circumferential direction is formed in each of the second circumferential direction groove 12 and the third circumferential direction groove 13. Further, as shown in Fig. 14, it is preferable that a distance L1 from the inner side in the tire width direction of the curve portion 19 to the first circumferential direction groove 11 is smaller than a distance L2 from an intermediate point P at the inner side in the tire width direction between the curve portion 19 and the curve portion 19 to the first circumferential direction groove 11. Also in this configuration, the vortex flow K is generated, and therefore the temperature increase of the tire 1 in travelling can be suppressed effectively without using a reinforcing member. Further, the bent portion (the first bent portion 17 or the second bent portion 18) and the curve portion 19 may be mixed in each of the second circumferential direction groove 12 and the third circumferential direction groove 13.

The present invention is not limited to a radial tire for a truck or a bus. The present invention can be also applied to a heavy load tire. The heavy load tire denotes a tire mounted to a heavy load vehicle such as a construction vehicle. By applying the present invention, also in the heavy load tire with a severe heat generating property, the temperature increase in travelling can be suppressed effectively. That is, the present invention is suitable for a heavy load tire with a severe heat generating property.

In the present invention, the vortex flow K is generated in the first bent portion 17 and the second bent portion 18, and the vortex flow may be generated in water flowing into the second circumferential direction groove 12 and the third circumferential direction groove 13. However, the vortex flow of water generated in the first bent portion 17 and the second bent portion 18 is hardly generated compared to the vortex flow K of air. In this regard, it is described below. A dashed line shown in Fig. 15(a) illustrates a contact surface of the tire 1 with water. The water flows into the tire 1 at the contact surface. Against this, a dashed line shown in Fig. 15(b) illustrates a contact surface of the tire 1 with air. The air flows into the tire 1 at the contact surface. In this way, the contact surface of the tire 1 with water is smaller than the contact surface of the tire 1 with air, and therefore considered by an area ratio, the water flowing into the tire 1 is less than the air flowing into the tire 1. Further, under the standard atmospheric pressure (0.1013 MPa), the density of water is larger than the density of air. That is, under the standard atmospheric pressure, water is heavier than air. In this way, the water flowing into the tire 1 is less than the air and water is heavier than air, and therefore the vortex flow of water generated in the first bent portion 17 and the second bent portion 18 is hardly generated compared to the vortex flow K of air.

### [Reference Signs List]

- 1, 2:: tire
- 10:: tread portion
- 11:: first circumferential direction groove
- 12:: second circumferential direction groove
- 13:: third circumferential direction groove
- 14:: fourth circumferential direction groove
- 15:: fifth circumferential direction groove
- 17:: first bent portion
- 18:: second bent portion
- 19:: curve portion
- 20:: first groove wall
- 21:: second groove wall
- 22:: groove bottom
- 23, 24, 25, 26:: corner portion
- 30:: first lateral groove
- 31:: second lateral groove
- 33, 34, 35, 36:: end portion
- 40:: tread end
- 50, 51, 52:: block
- 60, 61:: land portion
- 70:: sipe

## Claims

1. A tire comprising:
a tread portion (10);
at least one circumferential direction groove (12, 13)
formed on the tread portion (10), the circumferential direction groove (12, 13) including a plurality of bent portions (17, 18) to be extended in a zigzag manner in a tire circumferential direction; and
at least one first lateral groove (30) communicated with the circumferential direction groove (12, 13) and extended in a tire width direction,
wherein:
the bent portions (17, 18) are bent at an angle between 12 degrees and 41 degrees against the tire circumferential direction;
a groove width of the circumferential direction groove (12, 13) is set in a range between 13 mm and 19 mm;
the first lateral groove (30) includes an arc-shaped curve portion;
a groove depth of the first lateral groove (30) is smaller than a groove depth of the circumferential direction groove (12, 13);
a groove width of the first lateral groove (30) is smaller than the groove width of the circumferential direction groove (12, 13); and
the first lateral groove (30) includes a groove having one groove wall and another groove wall facing each other not to be contacted with each other when the tread portion (10) is contacted with the ground,
both groove walls of the bent portions (17, 18) facing each other are asymmetric with respect to a tire radial direction,
**characterized in that**:
an inclined angle of a groove wall at an inner side of a bend of the bent portions (17, 18) among the both groove walls of the bent portions (17, 18) facing each other is smaller than an inclined angle of a groove wall at an outer side of the bend of the bent portions (17, 18),
the bent portions (17, 18) mean all bent portions formed in the tire circumferential direction, and
the inclined angle denotes an angle that indicates how much the groove wall is inclined against a wheel tread.

2. The tire according to claim 1, wherein the at least one circumferential direction groove (12) is at least one second circumferential groove (12), the tire further comprising:
a third circumferential direction groove (13) formed on the tread portion (10), the third circumferential direction groove (13) including a plurality of bent portions (17, 18) to be extended in a zigzag manner in the tire circumferential direction;
a first circumferential direction groove (11) formed between the second circumferential direction groove (12) and the third circumferential direction groove (13); and
at least one second lateral groove (31) extended in the tire width direction,
wherein:
one end portion of the first lateral groove (30) is communicated with the second circumferential direction groove (12);
another end portion of the first lateral groove (30) is communicated with the first circumferential direction groove (11);
one end portion of the second lateral groove (31) is communicated with the third circumferential direction groove (13);
another end portion of the second lateral groove (31) is communicated with the first circumferential direction groove (11); and
an intersection between the another end portion of the first lateral groove (30) and the first circumferential direction groove (11) and an intersection between the another end portion of the second lateral groove (31) and the first circumferential direction groove (11) are shifted in the tire circumferential direction.

3. The tire according to claim 1 or 2, wherein the groove depth of the first lateral groove (30) is set in a range between 5% and 20% of the groove depth of the second circumferential direction groove (12).

4. The tire according to any one of claims 1 to 3, wherein:
a distance between the bent portions (17, 18) adjacent to each other in the second circumferential direction groove (12) is two or more times as large as the groove width of the second circumferential direction groove (12); and
the number of the bent portions (17, 18) in the second circumferential direction groove (12) is set to 100 or more on a circumference of the tire.

5. The tire according to any one of claims 1 to 4, wherein a groove bottom bent toward an inner side in the bent portions (17, 18) is formed in a circular shape.

6. The tire according to any one of claims 1 to 5, wherein a curve portion extended in a curve manner in the tire circumferential direction is formed in the second circumferential direction groove (12).

7. The tire according to any one of claims 1 to 6, wherein a groove width of an opening portion of the bent portions (17, 18) is larger than a groove width of a groove bottom.

8. The tire according to any one of claims 1 to 7, wherein the tire is formed as a heavy load tire.

## Patentansprüche

1. Reifen, der Folgendes umfasst:
einen Laufflächenabschnitt (10),
mindestens eine Umfangsrichtungsrille (12, 13), die auf dem Laufflächenabschnitt (10) geformt ist, wobei die Umfangsrichtungsrille (12, 13) eine Vielzahl von gebogenen Abschnitten (17, 18) einschließt, die sich in einer Zickzackweise in einer Reifenumfangsrichtung erstrecken sollen, und
mindestens eine erste seitliche Rille (30), die mit der Umfangsrichtungsrille (12, 13) verbunden ist und sich in eine Reifenbreitenrichtung erstreckt,
wobei:
die gebogenen Abschnitte (17, 18) in einem Winkel zwischen 12 Grad und 41 Grad gegenüber der Reifenumfangsrichtung gebogen sind,
eine Rillenbreite der Umfangsrichtungsrille (12, 13) in einem Bereich zwischen 13 mm und 19 mm festgesetzt ist,
die erste seitliche Rille (30) einen bogenförmigen Krümmungsabschnitt einschließt,
eine Rillentiefe der ersten seitlichen Rille (30) kleiner ist als eine Rillentiefe der Umfangsrichtungsrille (12, 13),
eine Rillenbreite der ersten seitlichen Rille (30) kleiner ist als die Rillenbreite der Umfangsrichtungsrille (12, 13) und
die erste seitliche Rille (30) eine Rille einschließt, die eine Rillenwand und eine andere Rillenwand aufweist, die einander gegenüberliegen, wobei sie nicht in Berührung miteinander gebracht werden sollen, wenn der Laufflächenabschnitt (10) in Berührung mit dem Boden gebracht wird,
die beiden Rillenwände der gebogenen Abschnitte (17, 18), die einander gegenüberliegen, in Bezug auf eine Reifenradialrichtung asymmetrisch sind,
**dadurch gekennzeichnet, dass**:
ein Neigungswinkel einer Rillenwand an einer inneren Seite einer Biegung der gebogenen Abschnitte (17, 18) innerhalb der beiden Rillenwände der gebogenen Abschnitte (17, 18), die einander gegenüberliegen, kleiner ist als ein Neigungswinkel einer Rillenwand an einer äußeren Seite der Biegung der gebogenen Abschnitte (17, 18),
die gebogenen Abschnitte (17, 18) alle gebogenen Abschnitte bezeichnen, die in der Reifenumfangsrichtung geformt sind, und
der Neigungswinkel einen Winkel bezeichnet, der angibt, wie stark die Rillenwand gegenüber einer Radlauffläche geneigt ist.

2. Reifen nach Anspruch 1, wobei die mindestens eine Umfangsrichtungsrille (12) mindestens eine zweite Umfangsrichtungsrille (12) ist, wobei der Reifen ferner Folgendes umfasst:
eine dritte Umfangsrichtungsrille (13), die auf dem Laufflächenabschnitt (10) geformt ist, wobei die dritte Umfangsrichtungsrille (13) eine Vielzahl von gebogenen Abschnitten (17, 18) einschließt, die sich in einer Zickzackweise in der Reifenumfangsrichtung erstrecken sollen,
eine erste Umfangsrichtungsrille (11), die zwischen der zweiten Umfangsrichtungsrille (12) und der dritten Umfangsrichtungsrille (13) geformt ist, und
mindestens eine zweite seitliche Rille (31), die sich in die Reifenbreitenrichtung erstreckt,
wobei:
ein Endabschnitt der ersten seitlichen Rille (30) mit der zweiten Umfangsrichtungsrille (12) verbunden ist,
ein anderer Endabschnitt der ersten seitlichen Rille (30) mit der ersten Umfangsrichtungsrille (11) verbunden ist,
ein Endabschnitt der zweiten seitlichen Rille (31) mit der dritten Umfangsrichtungsrille (13) verbunden ist,
ein anderer Endabschnitt der zweiten seitlichen Rille (31) mit der ersten Umfangsrichtungsrille (11) verbunden ist und
eine Überschneidung zwischen dem anderen Endabschnitt der ersten seitlichen Rille (30) und der ersten Umfangsrichtungsrille (11) und eine Überschneidung zwischen dem anderen Endabschnitt der zweiten seitlichen Rille (31) und der ersten Umfangsrichtungsrille (11) in der Reifenumfangsrichtung verschoben sind.

3. Reifen nach Anspruch 1 oder 2, wobei die Rillentiefe der ersten seitlichen Rille (30) in einem Bereich zwischen 5 % und 20 % der Rillentiefe der zweiten Umfangsrichtungsrille (12) festgesetzt ist.

4. Reifen nach einem der Ansprüche 1 bis 3, wobei:
ein Abstand zwischen den gebogenen Abschnitten (17, 18), die einander benachbart sind, in der zweiten Umfangsrichtungsrille (12) zwei- oder mehrmals so groß ist wie die Rillenbreite der zweiten Umfangsrichtungsrille (12) und
die Anzahl der gebogenen Abschnitte (17, 18) in der zweiten Umfangsrichtungsrille (12) auf 100 oder mehr auf einem Umfang des Reifens festgesetzt ist.

5. Reifen nach einem der Ansprüche 1 bis 4, wobei eine Rillensohle, die hin zu einer inneren Seite in den gebogenen Abschnitten (17, 18) gebogen ist, in einer kreisförmigen Gestalt geformt ist.

6. Reifen nach einem der Ansprüche 1 bis 5, wobei ein Krümmungsabschnitt, der sich in einer Krümmungsweise in der Reifenumfangsrichtung erstreckt, in der zweiten Umfangsrichtungsrille (12) geformt ist.

7. Reifen nach einem der Ansprüche 1 bis 6, wobei eine Rillenbreite eines Öffnungsabschnitts der gebogenen Abschnitte (17, 18) größer ist als eine Rillenbreite einer Rillensohle.

8. Reifen nach einem der Ansprüche 1 bis 7, wobei der Reifen als ein Schwerlastreifen geformt ist.

## Revendications

1. Bandage pneumatique, comprenant :
une partie de bande de roulement (10) ;
au moins une rainure à direction circonférentielle (12, 13) formée sur la partie de bande de roulement (10), la rainure à direction circonférentielle (12, 13) incluant une pluralité de parties fléchies (17, 18) configurées pour s'étendre en zigzag dans une direction circonférentielle du bandage pneumatique ; et
au moins une première rainure latérale (30) en communication avec la rainure à direction circonférentielle (12, 13) et s'étendant dans une direction de la largeur du bandage pneumatique ;
dans lequel :
les parties fléchies (17, 18) sont fléchies à un angle compris entre 12 degrés et 41 degrés par rapport à la direction circonférentielle du bandage pneumatique ;
une largeur de rainure de la rainure à direction circonférentielle (12, 13) est ajustée dans un intervalle compris entre 13 mm et 19 mm ;
la première rainure latérale (30) inclut une partie courbée en forme d'arc ;
une profondeur de rainure de la première rainure latérale (30) est inférieure à une profondeur de rainure de la rainure à direction circonférentielle (12, 13) ;
une largeur de rainure de la première rainure latérale (30) est inférieure à la largeur de rainure de la rainure à direction circonférentielle (12, 13) ; et
la première rainure latérale (30) inclut une rainure comportant une paroi de rainure et une autre paroi de rainure se faisant mutuellement face, mais ne devant pas entrer en contact lorsque la partie de bande de roulement (10) entre en contact avec le sol ;
les deux parois de rainure des parties fléchies (17, 18) se faisant mutuellement face sont asymétriques par rapport à une direction radiale du bandage pneumatique ;
**caractérisé en ce que** :
un angle incliné d'une paroi de rainure au niveau d'un côté interne d'un coude des parties fléchies (17, 18), parmi les deux parois de rainure des parties fléchies (17, 18) se faisant mutuellement face, est inférieur à un angle incliné d'une paroi de rainure au niveau d'un côté extérieur du coude des parties fléchies (17, 18) ;
les parties fléchies (17, 18) désignent toutes les parties fléchies formées dans la direction circonférentielle du bandage pneumatique ; et
l'angle incliné désigne un angle indiquant l'importance de l'inclinaison de la paroi de rainure par rapport à une bande de roulement de la roue.

2. Bandage pneumatique selon la revendication 1, dans lequel la au moins une rainure à direction circonférentielle (12) constitue au moins une deuxième rainure circonférentielle (12), le bandage pneumatique comprenant en outre :
une troisième rainure à direction circonférentielle (13) formée sur la partie de bande de roulement (10), la troisième rainure à direction circonférentielle (13) incluant une pluralité de parties fléchies (17, 18) configurées pour s'étendre en zigzag dans la direction circonférentielle du bandage pneumatique ;
une première rainure à direction circonférentielle (11) formée entre la deuxième rainure à direction circonférentielle (12) et la troisième rainure à direction circonférentielle (13) ; et
au moins une deuxième rainure latérale (31) s'étendant dans la direction de la largeur du bandage pneumatique ;
dans lequel :
une partie d'extrémité de la première rainure latérale (30) est en communication avec la deuxième rainure à direction circonférentielle (12) ;
une autre partie d'extrémité de la première rainure latérale (30) est en communication avec la première rainure à direction circonférentielle (11) ;
une partie d'extrémité de la deuxième rainure latérale (31) est en communication avec la troisième rainure à direction circonférentielle (13) ;
une autre partie d'extrémité de la deuxième rainure latérale (31) est en communication avec la première rainure à direction circonférentielle (11) ; et
une intersection entre l'autre partie d'extrémité de la première rainure latérale (30) et la première rainure à direction circonférentielle (11) et une intersection entre l'autre partie d'extrémité de la deuxième rainure latérale (31) et la première rainure à direction circonférentielle (11) sont décalées dans la direction circonférentielle du bandage pneumatique.

3. Bandage pneumatique selon les revendications 1 ou 2, dans lequel la profondeur de rainure de la première rainure latérale (30) est ajustée dans un intervalle représentant 5% à 20% de la profondeur de rainure de la deuxième rainure à direction circonférentielle (12).

4. Bandage pneumatique selon l'une quelconque des revendications 1 à 3, dans lequel :
une distance entre les parties fléchies (17, 18) adjacentes les unes aux autres dans le deuxième rainure à direction circonférentielle (12) est supérieure de deux fois ou plus à la largeur de rainure de la deuxième rainure à direction circonférentielle (12) ; et
le nombre de parties fléchies (17, 18) dans la deuxième rainure à direction circonférentielle (12) est ajusté à 100 ou plus sur une circonférence du bandage pneumatique.

5. Bandage pneumatique selon l'une quelconque des revendications 1 à 4, dans lequel un fond de rainure fléchi vers un côté interne dans les parties fléchies (17, 18) est formé en une forme circulaire.

6. Bandage pneumatique selon l'une quelconque des revendications 1 à 5, dans lequel une partie courbée s'étendant de manière courbée dans la direction circonférentielle du bandage pneumatique est formée dans la deuxième rainure à direction circonférentielle (12).

7. Bandage pneumatique selon l'une quelconque des revendications 1 à 6, dans lequel une largeur de rainure d'une partie d'ouverture des parties fléchies (17, 18) est supérieure à une largeur de rainure d'un fond de rainure.

8. Bandage pneumatique selon l'une quelconque des revendications 1 à 7, dans lequel le bandage pneumatique a la forme d'un bandage pneumatique pour poids lourds.
